# EUROPEAN PATENT SPECIFICATION

(11) **EP 2 792 193 B1**
(45) Date of publication and mention of the grant of the patent: **31.08.2016**
(21) Application number: 12858409.1
(22) Date of filing: 17.12.2012
(51) Int. Cl.: H04W 52/36, H04W 84/12, H04W 28/06

(54) **SYSTEM AND METHOD FOR COMMUNICATING USING SHORT-HEADER FRAMES**
SYSTEM UND VERFAHREN ZUR KOMMUNIKATION MITTELS SHORT-HEADER-FRAMES
SYSTÈME ET PROCÉDÉ POUR COMMUNIQUER EN UTILISANT DES TRAMES À EN-TÊTES COURTS

(30) Priority: 15.12.2011 US 201161576237 P; 13.01.2012 US 201261586581 P; 12.10.2012 US 201213651363
(43) Date of publication of application: 22.10.2014
(73) Proprietor: Huawei Technologies Co., Ltd., Longgang District Shenzhen, Guangdong 518129 (CN)
(72) Inventor: ABOUL-MAGD, Osama, Kanata, Ontario K2M-2K2 (CA); AU, Kwok Shum, Shenzhen Guangdong 518129 (CN)
(74) Representative: Epping - Hermann - Fischer
(86) International application number: PCT/CN2012/086751
(87) International publication number: WO 2013/087038

(56) References cited:
- EP-A2- 1 594 284
- CN-A- 1 780 197
- JP-A- 2009 265 764
- US-A1- 2004 213 274
- US-A1- 2007 047 583
- US-A1- 2008 037 540
- US-A1- 2010 142 560
- US-A1- 2012 287 932
- ZAFER SAHINOGLU (MITSUBISHI ELECTRIC RESEARCH LABS): "TG4e drafting Draft specification for IEEE 802.15.4e Factory Automation", PROJECT: IEEE P802.15 WORKING GROUP FOR WIRELESS PERSONAL AREA NETWORKS (WPANS) , 7 April 2010 (2010-04-07), pages 1-56, XP002616217, Retrieved from the Internet: URL:https://mentor.ieee.org/802.15/dcn/09/ 15-09-0401-03-004e-draft-text-for-factory- automation.doc [retrieved on 2011-01-11]
- "d1P802-15-4e_Draft_Standard ; d1P802-15-4e_Draft_Standard", IEEE DRAFT; D1P802-15-4E_DRAFT_STANDARD, IEEE-SA, PISCATAWAY, NJ USA, vol. 802.15.4e, 8 April 2010 (2010-04-08), pages 1-213, XP017636439, [retrieved on 2010-04-08]

## Description

### FIELD OF INVENTION

The present disclosure relates generally to digital communications, and more particularly to a system and method for communicating using short data frames.

### BACKGROUND

Wi-Fi is a wireless standard for connecting electronic devices. Wi-Fi may also be known as IEEE 802.11. Generally, a Wi-Fi enabled device (also commonly referred to as a station), such as a personal computer, a tablet, a personal digital assistant, a video game console, a television, a smartphone, a digital media player, and the like may connect to a service provider when it is within range of a Wi-Fi network connected to the service provider.

An objective of IEEE 802.11 is the support of new sets of devices or stations. The IEEE 802.11ah task group is one group working on such an objective. A primary feature of the new set of devices that is of interest in the IEEE 802.11ah task group is that they are constrained in their power consumption. The new devices are usually battery operated with an objective of running for a number of years without requiring battery replacement.

Document "TG4e drafting - Draft specification for IEEE 802.15.4e Factory Automation", provides a standard, which defines the protocol for data communication devices in a wireless personal area network, and allows the use of a super frame structure based on a beacon whose frame has a short MAC header of only 1 octet length with a shortened Frame Control field.

US 2010/142560 A1 provides a method and apparatus for reducing required bandwidth for transmission a data packet, to improve the capacity of a transmission channel. The capacity improvement is based on compressing data packet header fields, such as MAC addresses.

XP017636439 discloses short media access control MAC frames (IEEE 802.15.4 frames) having fewer fields than a full-length MAC frame

### SUMMARY

Example embodiments of the present disclosure which provide a system and method for communicating using short-header frames.

In accordance with an example embodiment of the present disclosure, a method for communicating information from a power-constrained device is provided. The method includes configuring, by the power-constrained device, a short media access control (MAC) frame having fewer fields than a full-length MAC frame, where the full-length MAC frame is a full-length IEEE 802.11 MAC frame, and the short MAC frame is a shortened IEEE 802.11 MAC frame consisting of a frame control field, two MAC address fields, a sequence control field, a frame body, and a frame check sequence, FCS, field, the sequence control field being positioned in-between the two MAC address fields and the frame body, where all other fields in the full-length MAC frame are excluded from the short MAC frame. The method also includes transmitting, by the power-constrained device, the short MAC frame.

In accordance with another example embodiment of the present disclosure, a communications device is provided. The communications device includes a transmitter, and a processor operatively coupled to the transmitter. The transmitter transmits a short media access control (MAC) frame, the short MAC frame having fewer fields than a full-length MAC frame, where the full-length MAC frame is a full-length IEEE 802.11 MAC frame, and the short MAC frame is a shortened IEEE 802.11 MAC frame consisting of a frame control field, two MAC address fields, a sequence control field, a frame body, and a frame check sequence, FCS, field, the sequence control field being positioned in-between the two MAC address fields and the frame body, where all other fields in the full-length MAC frame are excluded from the short MAC frame. The processor generates the short MAC frame.

One advantage of an embodiment is that short-header frames reduce communications overhead for a battery powered device that is interested in extending battery life. The devices do not have to receive and/or transmit as much information. Therefore, the device can operate for longer periods of time between battery changes.

A further advantage of an embodiment is that the short-header frames include a subset of control information typically present in a full-length header frame. Hence, the processing of the short-header frames is reduced and the devices may be made simpler due to relaxed processing requirements.

### BRIEF DESCRIPTION OF THE DRAWINGS

For a more complete understanding of the present disclosure, and the advantages thereof, reference is now made to the following descriptions taken in conjunction with the accompanying drawing, in which:
Figure 1 illustrates an example communications system according to example embodiments described herein;
Figure 2 illustrates a full-length IEEE 802.11 MAC frame;
Figure 3 illustrates a full-length frame control field in a MAC frame;
Figure 4 illustrates a first example shortened MAC frame according to example embodiments described herein;
Figure 5 illustrates an example shortened frame control field according to example embodiments described herein;
Figure 6 illustrates an example PHY Protocol Data Unit (PPDU) according to example embodiments described herein;
Figure 7 illustrates an example modified frame control field for supporting indicating a shortened MAC frame and access categories (AC) in a frame control field according to example embodiments described herein;
Figure 8 illustrates a second example shortened MAC frame according to example embodiments described herein;
Figure 9 illustrates an example communications device according to example embodiments described herein; and
Figure 10 illustrates an example flow diagram of operations in transmitting a short frame according to example embodiments described herein.

### DETAILED DESCRIPTION

The operating of the current example embodiments and the structure thereof are discussed in detail below. It should be appreciated, however, that the present disclosure provides many applicable inventive concepts that can be embodied in a wide variety of specific contexts. The specific embodiments discussed are merely illustrative of specific structures of the disclosure and ways to operate the disclosure, and do not limit the scope of the disclosure.

One embodiment of the disclosure relates to communicating using short-header frames. For example, a communications device transmits a short media access control frame having fewer fields than a full-length media access frame. For example, a short frame includes a frame control field immediately adjacent to a first address field, a second address field immediately adjacent to the first address field, a sequence control field immediately adjacent to the second address field, and a frame check sequence field adjacent to the sequence control field.

The present disclosure will be described with respect to example embodiments in a specific context, namely an IEEE 802.11 ah compliant communications system that supports simplified, battery powered devices. The disclosure may also be applied, however, to other communications systems, both standards compliant and non-standards compliant, that support simplified, battery powered devices.

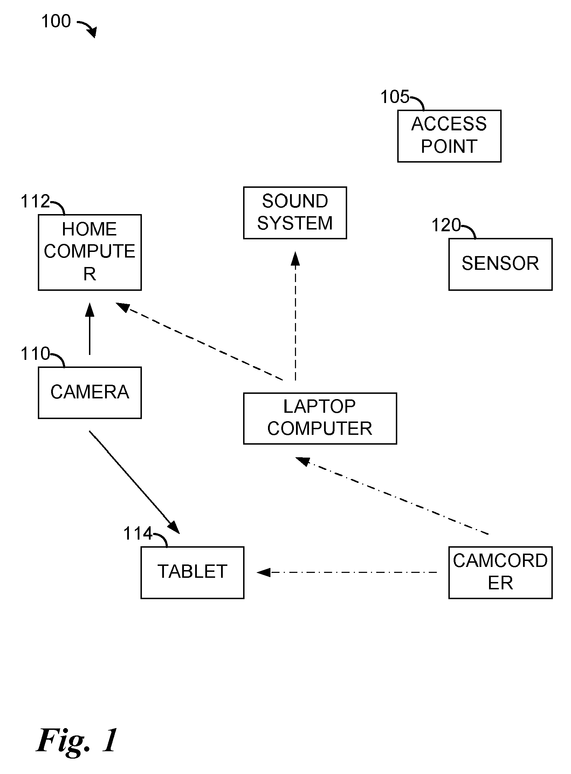

Figure 1 illustrates an example communications system 100. Communications system 100 may include a plurality of Wi-Fi enabled devices, also commonly referred to as stations or STA, that are capable of communicating with one another through an access point (AP) 105. Furthermore, the stations may also communicate with AP 105. Typically, a first station, such as a camera 110 may communicate with a second station, such as a home computer 112, and/or a third station, such as a tablet 114, by transmitting to AP 105, which in turn transmits to the second station or the third station. It is noted that the transmission to AP 105 and from AP 105 are not shown in Figure 1.

Communications system 100 also includes a new class of devices, e.g., battery limited devices, such as sensor 120, which are primarily used to gather information and provide the information to an information aggregator. Examples of battery limited devices include temperature sensors, rain sensors, humidity sensors, wind sensors, fire sensors, security sensors, proximity sensors, automotive status sensors, heat sensors, and the like.

In general, battery limited devices do not need to transmit large amounts of information, high bandwidth communications, or remain active for extended periods of time. Typically, battery limited devices wake up, make a measurement and occasionally send results of the measurement to an information aggregator. Therefore, battery limited devices normally do not make use of fully featured advanced forms of communications, such as multiple input, multiple output (MIMO), multi-user (MU), and the like, and associated control signaling associated therewith.

Other types of devices with similar performance requirements and needs as battery limited devices may include sensor devices, size limited devices, heat limited devices, and the like. Without loss of generality, the battery limited devices as well as these other types of devices may be referred to as power-constrained devices. These power-constrained devices may be configured to trade-off communications performance achievable through complex communications techniques, multiple antennas, and the like, to gain extended battery life, reduced complexity, size, and/or heat dissipation.

Due to being battery powered and being designed to maximize battery life, an issue related to the support of power-constrained devices is a need to preserve power during transmission and reception of Media Access Control (MAC) frames. In general, the shorter the MAC frames, the greater the battery life of a power-constrained device that is transmitting and/or receiving the MAC frames.

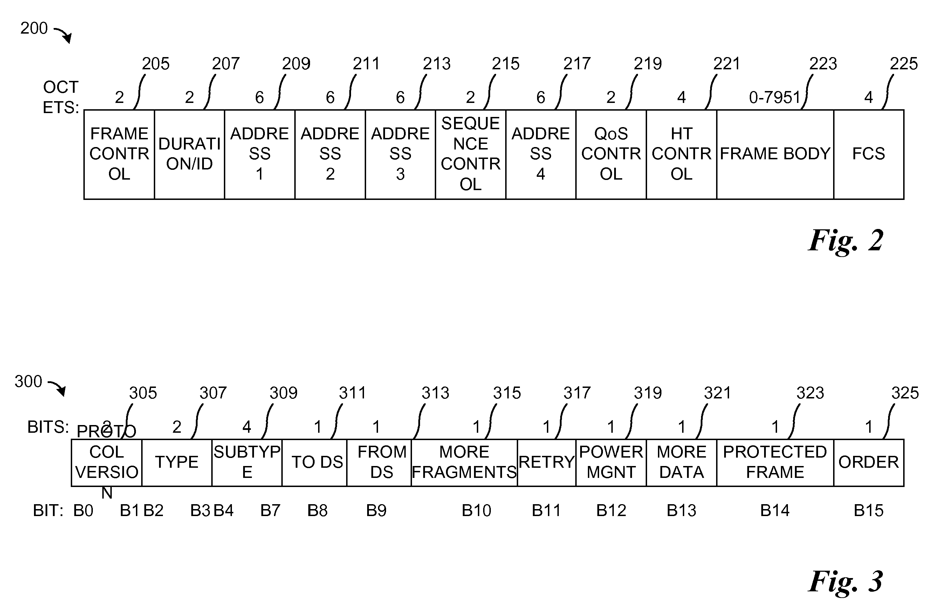

Figure 2 illustrates a full length IEEE 802.11 MAC frame 200. MAC frame 200 includes a two-byte frame control field 205, a two-byte duration identifier (ID) field 207, a six-byte first address field 209, a six-byte second address field 211, a six-byte third address field 213, a two-byte sequence control field 215, a six-byte fourth address field 217, a two-byte Quality of Service (QoS) field 219, a four-byte Higher Throughput (HT) control field 221, a variable length (from 0 to 7951 bytes long) frame body 223, and a four-byte Frame Check Sequence (FCS) field 225. Combined, the control information (all of the fields MAC frame 200 except frame body 223) is a total of 40 bytes long. For frame bodies of 100 to 300 bytes, the control information overhead accounts for 12% to 29% of the overall transmission of a device. Furthermore, since the device may not be utilizing the fully featured forms of communications, a significant amount of the power consumed in transmitting and/or receiving the control information may not bear useful information.

It may be possible to shorten a MAC frame header by eliminating some fields and/or assigning shorter lengths to others. The shortened MAC frame header (and hence, a correspondingly shortened MAC frame) may be used by devices that are desirous to minimize power consumption to extend battery life, as well as devices that do not have a need to utilize the fully featured forms of communications supported by the full-length MAC frame (i.e., MAC frame 200).

Figure 3 illustrates a full-length frame control field 300 in a MAC frame. Frame control field 300 is a two-byte long field that includes information that may not be relevant to a device, such as a power-constrained device. Frame control field 300 includes a two-bit protocol version field 305, a two-bit type field 307, a four-bit subtype field 309, a one-bit to Distribution System (DS) field 311, a one-bit from DS field 313, a one-bit more fragments field 315, a one-bit retry field 317, a one-bit power management field 319, a one-bit more data field 321, a one-bit protected frame fiend 323, and a one-bit order field 325.

Some of the information in frame control field 300 may not be relevant for transmissions used by the power-constrained devices. As an example, for a short transmission (e.g., transmissions with a data field ranging from 100 bytes to 200 bytes in length) that fits within a single frame, more fragment field 315 may be extraneous. Additionally, transmissions of power-constrained devices are likely to be confined to the power-constrained device and its AP. Hence, the four frame address formats may be eliminated, as are to DS field 311 and from DS field 313 since the use of the DS is no longer needed.

In various embodiments, some of the information in a full-length MAC frame may be removed and/or merged with other information to produce a short MAC frame. As an example, HT control field 221 is normally used for link adaptation between a transmitter and a receiver. However, other techniques for link adaptation that do not require four-bytes to be added to a MAC frame may be used. Similarly, QoS field 219 includes many sub-fields that are not relevant to power-constrained device operation. Therefore, it may be possible to reduce the size of QoS field 219, e.g., from two-bytes down to just two-bits that may be used to indicate Access Category (AC), which is representative of the priority of the frame.

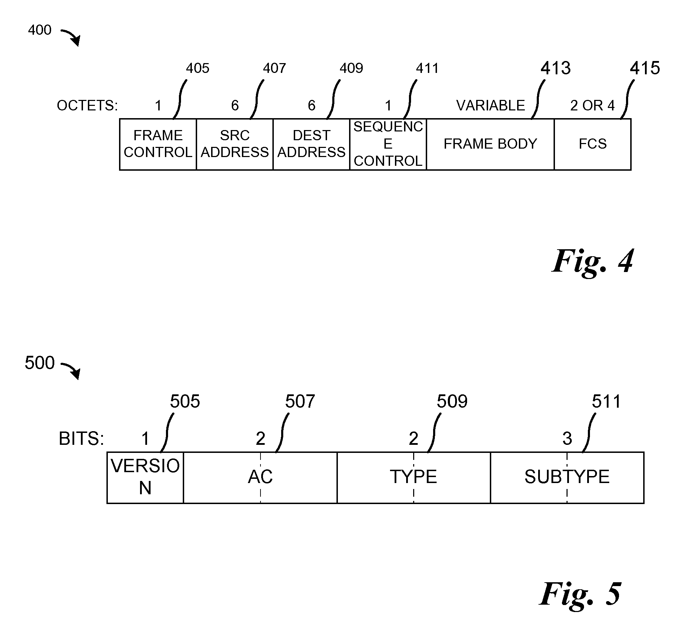

Figure 4 illustrates a first example shortened MAC frame 400. MAC frame 400 includes a one-byte frame control field 405, a six-byte source address field 407 (source address field 407 may also be referred to as address 1 field 407), a six-byte destination address field 409 (destination address field 409 may also be referred to as address 2 field 409), a one-byte sequence control field 411, a variable length frame body 413, and a two- or four-byte FCS field 415. As shown in Figure 4, MAC frame 400 includes two addresses rather than the four addresses as shown previously. Source address field 407 may include a MAC address of a power-constrained device transmitting MAC frame 400, while destination address field 409 may include a MAC address of a destination device of MAC frame 400. It is noted that although shown in Figure 4 as being 6-bytes long, one or both source address field 407 and destination address field 409 may be any size, including zero bytes (i.e., they are absent). As an example, one or both source address field 407 and destination address field 409 may be zero, one, two, three, four, five, six, seven, and the like, bytes long fields. It is also noted that MAC frame 400 does not include a QoS field and a HT control field, with information related to AC being included in frame control field 405.

FCS field 415 may be two bytes or four bytes long, for example. As an example, when FCS field 415 is two bytes long, it may contain either an IEEE 802.11 16-bit Cyclic Redundancy Check (CRC) or a 16-bit Forward Error Correction (FEC) code. As another example, when FCS field 415 is four bytes long, it may contain an IEEE 802.11 32-bit CRC.

It is noted that the lengths of the fields of MAC frame 400 are for illustrative purposes only, and that other lengths may be possible. Therefore, the discussion of the example lengths of the fields of MAC frame 400 should not be construed as being limiting to the scope of the example embodiments. Furthermore, the ordering of the fields in MAC frame 400 is shown as an illustrative example. Other orderings of the fields in MAC frame 400 are possible.

Figure 5 illustrates an example shortened frame control field 500. Frame control field 500 may be an example embodiment of frame control field 405 of MAC frame 400. Frame control field 500 may be shortened to a one-byte field (compared to a two-byte field for the frame control field of a previously discussed MAC field). Frame control field 500 includes a one-bit protocol version field 505, a two-bit AC field 507, a two-bit frame type field 509, and a three-bit subtype field 511. As an example, frame type field 509 may indicate the type of the frame: Data, Management, or Control frame. Subtype field 511 may indicate the subtype of the frame within a particular type, e.g., an acknowledgment (ACK) frame, a request to send (RTS) frame, and the like. It is noted that the example lengths of frame control field 500 and its respective fields are for illustrative purposes only, and that other lengths are possible. Furthermore, the ordering of the fields in frame control field 500 is shown as an illustrative example. Other orderings of the fields in frame control field 500 are possible.

Since a shortened MAC frame (e.g., MAC frame 400) differs from a full-length MAC frame (e.g., MAC frame 200), a mechanism may be needed to distinguish the shortened MAC frame from the full-length MAC frame. According to an example embodiment, the shortened MAC frame may be distinguished from the full-length MAC frame using an indicator. As an example, a bit in a Physical layer (PHY) header may be used to distinguish shortened MAC frames from the full-length MAC frame.

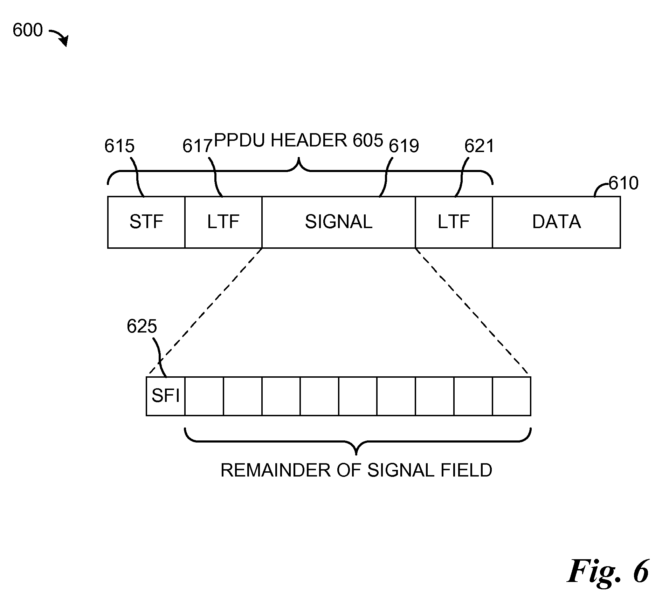

Figure 6 illustrates a PHY Protocol Data Unit (PPDU) 600. PPDU 600 comprises a PPDU header 605 and a data region 610. PPDU header 605 includes a Short Training Field (STF) 615, a first Long Training Field (LTF) 617, a signal field 619, and a second LTF field 621. A Short Frame Indication (SFI) 625 in signal field 619 may indicate that the MAC frame in data region 610 is a shortened MAC frame. SFI 625 may be a single bit value, however, multiple bits (such as two, three, four, and the like) may be used. It is noted that PPDU 600 is an example of a PHY control element that may be used to carry the shortened MAC frame indication.

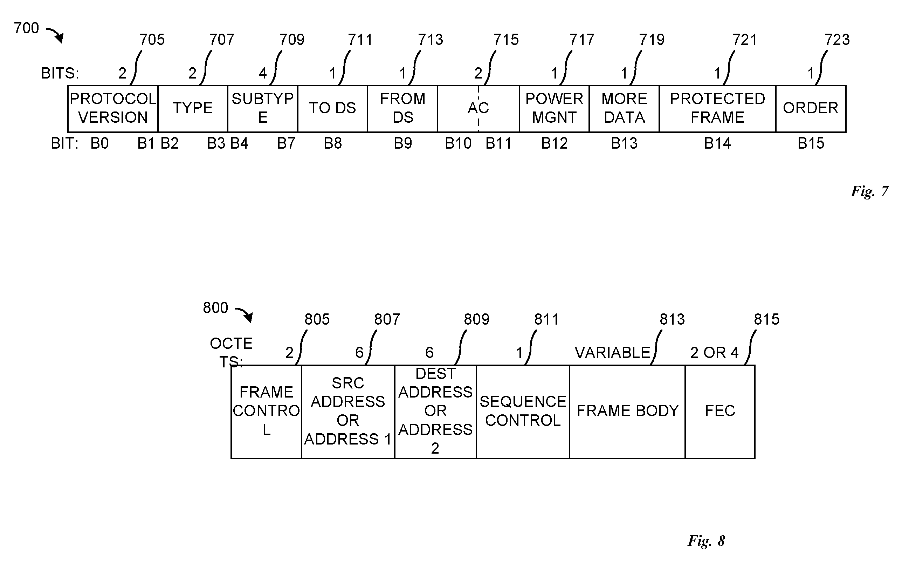

Other techniques for indicating a shortened MAC frame that do not utilize a PPDU header are possible. As an example, a shortened MAC frame indication may also be included in the MAC header of the frame. As another example, a value in a subtype field (e.g., subtype field 511) of a frame control field (e.g., frame control field 500) may be used to indicate a shortened MAC frame. Alternatively, frame control field 300 may be modified so that subtype field 309 may be used to indicate a shortened MAC frame (Please see Figure 7 discussed below for an example modification of frame control field 300). Using the frame control field to indicate a shortened MAC frame may be advantageous in that PHY header resources are not required.

Figure 7 illustrates a modified frame control field 700 for supporting indicating a shortened MAC frame and access categories in a frame control field. Frame control field 700 includes a two-bit protocol version field 705, a two-bit type field 707, a four-bit subtype field 709, a one-bit to DS field 711, a one-bit from DS field 713, a two-bit AC field 715, a one-bit power management field 717, a one-bit more data field 719, a one-bit protected frame fiend 721, and a one-bit order field 723. Subtype field 709 may be used to carry an indicator for a shortened MAC frame. In order to avoid adding a QoS field, two bits of frame control field 700 (i.e., AC field 715) may be used for AC indication. Although shown as being a two-bit field, AC field 715 may be any number of bits in length, such as one, three, four, and the like. Additionally, AC field 715 may be located anywhere in the MAC header.

Figure 8 illustrates a second example shortened MAC frame 800. MAC frame 800 includes a two-byte frame control field 805, a six-byte source address (or address 1) field 807, a six-byte destination address (or address 2) field 809, a one-byte sequence control field 811, a variable length frame body 813, and a two- or four-byte FEC field 815. It is noted that although shown in Figure 8 as being 6-bytes long, one or both source address field 807 and destination address field 809 may be any size, including zero bytes (i.e., they are absent).

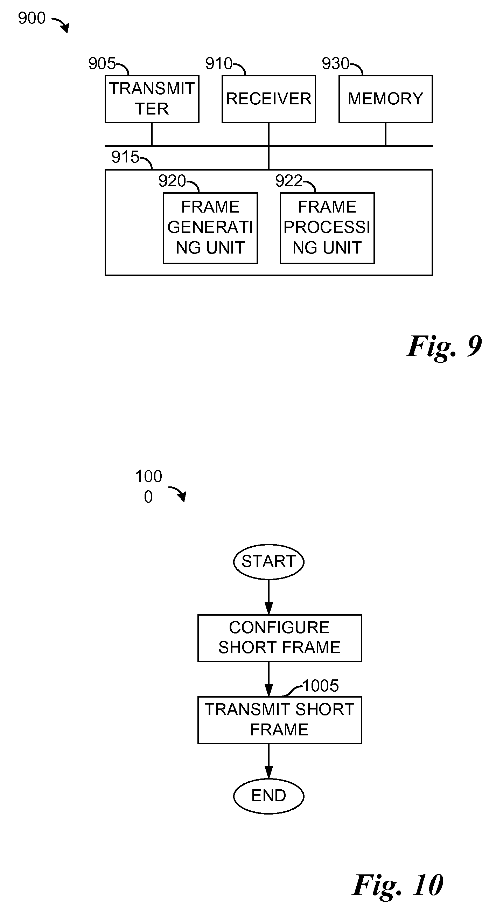

Figure 9 illustrates a diagram of a communications device 900. Communications device 900 may be an implementation of a power-constrained device, such as a sensor device or a device that is configured to trade-off size, complexity, battery life, and the like, for extended battery life, reduced complexity, size, and/or heat dissipation, of a communications system. Communications device 900 may be used to implement various ones of the embodiments discussed herein. As shown in Figure 9, a transmitter 905 is configured to send a shortened MAC frame, an indication of the shortened MAC frame, information, and the like, and a receiver 910 is configured to receive a shortened MAC frame, an indication of the shortened MAC frame, information, and the like. Transmitter 905 and receiver 910 may have a wireless interface, a wireline interface, or a combination thereof

A frame generating unit 920 is configured to generate a MAC frame, such as a shortened MAC frame and/or a full-length MAC frame, as well as a MAC frame indicator, for transmission. A frame processing unit 922 is configured to process a received MAC frame, such as a shortened MAC frame and/or a full-length MAC frame, as well as a MAC frame indicator. A memory 930 is configured to store MAC frames, information for populating fields of the MAC frames, and the like.

The elements of communications device 900 may be implemented as specific hardware logic blocks. In an alternative, the elements of communications device 900 may be implemented as software executing in a processor, controller, application specific integrated circuit, or so on. In yet another alternative, the elements of communications device 900 may be implemented as a combination of software and/or hardware.

As an example, transmitter 905 and receiver 910 may be implemented as a specific hardware block, while frame generating unit 920 and frame processing unit 922 may be software modules executing in a processor 915, such as a microprocessor, a digital signal processor, a custom circuit, or a custom compiled logic array of a field programmable logic array.

Figure 10 illustrates a flow diagram of operations 1000 in transmitting a short frame. Operations 1000 may be indicative of operations occurring in a device, such as a power-constrained device, an AP, and the like, as the device transmits a short frame having fewer fields than a full-length frame. The transmission of the short frame helps to reduce power consumption in the device, as well as power consumption at a receiving device. Operations 1000 may include the device transmitting the short frame (block 1005).

Although the present disclosure and its advantages have been described in detail, it should be understood that various changes, substitutions and alterations can be made herein without departing from the scope of the disclosure as defined by the appended claims.

## Claims

1. A method for communicating information from a power-constrained device, the method comprising:
configuring, by the power-constrained device, a short media access control, MAC, frame (400) having fewer fields than a full-length MAC frame (200), wherein the full-length MAC frame (200) is a full-length IEEE 802.11 MAC frame, and the short MAC frame (400) is a shortened IEEE 802.11 MAC frame consisting of a frame control field (405), two MAC address fields (407, 409), a sequence control field (411), a frame body (413), and a frame check sequence, FCS, field (415), the sequence control field (411) being positioned in-between the two MAC address fields (407, 409) and the frame body (413), wherein all other fields in the full-length MAC frame (200) are excluded from the short MAC frame (400); and
transmitting (1005), by the power-constrained device, the short MAC frame (400).

2. The method of claim 1, wherein the short MAC frame (400) comprises at least one field with a length shorter than a length of a field in the full-length MAC frame (200).

3. The method of claim 1, wherein the frame control field (405) is one of a 1-byte long and a 2-byte long field, the two MAC address fields (407, 409) are each variable length fields, the sequence control field (411) is a 1-byte long field, and the FCS field (415) is one of a 2-byte long and a 4-byte long field.

4. The method of claim 1, wherein a frame access category is indicated by one or more bits in the short MAC frame (400).

5. The method of claim 1, wherein the short MAC frame (400) has a short frame indication (625), wherein the short frame indication (625) is located in a signal field (619) of a physical layer protocol data unit (600).

6. The method of claim 1, wherein the short MAC frame (400) has a subtype field (511) in a frame control field (500) differentiating the short MAC frame (400) from the full-length MAC frame (200).

7. A communications device comprising:
a transmitter (905) configured to transmit a short media access control, MAC, frame (400), the short MAC frame (400) having fewer fields than a full-length MAC frame (200), wherein the full-length MAC frame (200) is a full-length IEEE 802.11 MAC frame, and the short MAC frame (400) is a shortened IEEE 802.11 MAC frame consisting of a frame control field (405), two MAC address fields (407, 409), a sequence control field (411), a frame body (413), and a frame check sequence, FCS, field (415), the sequence control field (411) being positioned in-between the two MAC address fields (407, 409) and the frame body (413), wherein all other fields in the full-length MAC frame (200) are excluded from the short MAC frame (400); and
a processor (915) operatively coupled to the transmitter (905), the processor (915) configured to generate the short MAC frame (400).

8. The communications device of claim 7, wherein the short MAC frame (400) comprises at least one field with a length shorter than a length of a field in the full-length MAC frame (200).

9. The communications device of claim 7, wherein the processor (915) is configured to differentiate the short MAC frame (400) from the full-length MAC frame (200) with a short frame indication (625).

10. The communications device of claim 7, wherein the processor (915) is configured to differentiate the short MAC frame (400) from the full-length MAC frame (200) with a subtype field (511) in a frame control field (500) of the full-length MAC frame (200).

## Patentansprüche

1. Verfahren zum Kommunizieren von Informationen von einer leistungsbeschränkten Vorrichtung, wobei das Verfahren Folgendes umfasst:
Konfigurieren durch die leistungsbeschränkte Vorrichtung eines kurzen Medienzugangssteuerungs-Rahmens, MAC-Rahmens, (400), der weniger Felder aufweist als ein MAC-Rahmen (200) mit voller Länge, wobei der MAC-Rahmen (200) mit voller Länge ein MAC-Rahmen mit voller Länge nach IEEE 802.11 ist und der kurze MAC-Rahmen (400) ein gekürzter MAC-Rahmen nach IEEE 802.11 ist, der aus einem Rahmensteuerfeld (405), zwei MAC-Adressfeldern (407, 409), einem Folgensteuerfeld (411), einem Rahmenkörper (413) und einem Rahmenprüffolgen-Feld, FCS-Feld, (415) besteht, wobei das Folgensteuerfeld (411) zwischen den zwei MAC-Adressfeldern (407, 409) und dem Rahmenkörper (413) positioniert ist, wobei alle anderen Felder in dem MAC-Rahmen (200) mit voller Länge in dem kurzen MAC-Rahmen (400) nicht enthalten sind; und
Senden (1005) des kurzen MAC-Rahmens (400) durch die leistungsbeschränkte Vorrichtung.

2. Verfahren nach Anspruch 1, wobei der kurze MAC-Rahmen (400) wenigstens ein Feld mit einer Länge umfasst, die kürzer ist als eine Länge eines Felds in dem MAC-Rahmen (200) mit voller Länge.

3. Verfahren nach Anspruch 1, wobei das Rahmensteuerfeld (405) ein 1 Byte langes oder ein 2 Byte langes Feld ist, die zwei MAC-Adressfelder (407, 409) jeweils Felder variabler Länge sind, das Folgensteuerfeld (411) ein 1 Byte langes Feld ist und das FCS-Feld (415) ein 2 Byte langes oder ein 4 Byte langes Feld ist.

4. Verfahren nach Anspruch 1, wobei eine Rahmenzugangskategorie durch ein oder mehrere Bits in dem kurzen MAC-Rahmen (400) angegeben ist.

5. Verfahren nach Anspruch 1, wobei der kurze MAC-Rahmen (400) eine Kurzrahmenangabe (625) aufweist, wobei sich die Kurzrahmenangabe (625) in einem Signalfeld (619) einer Bitübertragungsschicht-Protokolldateneinheit (600) befindet.

6. Verfahren nach Anspruch 1, wobei der kurze MAC-Rahmen (400) ein Untertypfeld (511) in einem Rahmensteuerfeld (500) aufweist, das den kurzen MAC-Rahmen (400) von dem MAC-Rahmen (200) mit voller Länge unterscheidet.

7. Kommunikationsvorrichtung, die Folgendes umfasst:
einen Sender (905), der konfiguriert ist, einen kurzen Medienzugangssteuerungs-Rahmen, MAC-Rahmen, (400) zu konfigurieren, wobei der kurze MAC-Rahmen (400) weniger Felder aufweist als ein MAC-Rahmen (200) mit voller Länge, wobei der MAC-Rahmen (200) mit voller Länge ein MAC-Rahmen mit voller Länge nach IEEE 802.11 ist und der kurze MAC-Rahmen (400) ein gekürzter MAC-Rahmen nach IEEE 802.11 ist, der aus einem Rahmensteuerfeld (405), zwei MAC-Adressfeldern (407, 409), einem Folgensteuerfeld (411), einem Rahmenkörper (413) und einem Rahmenprüffolgen-Feld, FCS-Feld, (415) besteht, wobei das Folgensteuerfeld (411) zwischen den zwei MAC-Adressfeldern (407, 409) und dem Rahmenkörper (413) positioniert ist, wobei alle anderen Felder in dem MAC-Rahmen (200) mit voller Länge in dem kurzen MAC-Rahmen (400) nicht enthalten sind; und
einen Prozessor (915), der mit dem Sender (905) betriebstechnisch gekoppelt ist, wobei der Prozessor (915) konfiguriert ist, den kurzen MAC-Rahmen (400) zu erzeugen.

8. Kommunikationsvorrichtung nach Anspruch 7, wobei der kurze MAC-Rahmen (400) wenigstens ein Feld mit einer Länge umfasst, die kürzer ist als eine Länge eines Felds in dem MAC-Rahmen (200) mit voller Länge.

9. Kommunikationsvorrichtung nach Anspruch 7, wobei der Prozessor (915) konfiguriert ist, den kurzen MAC-Rahmen (400) von dem MAC-Rahmen (200) mit voller Länge mit einer Kurzrahmenangabe (615) zu unterscheiden.

10. Kommunikationsvorrichtung nach Anspruch 7, wobei der Prozessor (915) konfiguriert ist, den kurzen MAC-Rahmen (400) von dem MAC-Rahmen (200) mit voller Länge mit einem Untertypfeld (511) in einem Rahmensteuerfeld (500) des MAC-Rahmens (200) mit voller Länge zu unterscheiden.

## Revendications

1. Procédé pour communiquer des informations à partir d'un dispositif à puissance limitée, le procédé comprenant les étapes suivantes :
configurer, par le dispositif à puissance limitée, une trame de contrôle d'accès au support, MAC, courte (400) ayant moins de champs qu'une trame MAC pleine longueur (200), la trame MAC pleine longueur (200) étant une trame MAC IEEE 802.11 pleine longueur, et la trame MAC courte (400) étant une trame MAC IEEE 802.11 raccourcie constituée d'un champ de contrôle de trame (405), de deux champs d'adresse MAC (407, 409), d'un champ de contrôle de séquence (411), d'un corps de trame (413) et d'un champ de séquence de vérification de trame, FCS (415), le champ de contrôle de séquence (411) étant positionné entre les deux champs d'adresse MAC (407, 409) et le corps de trame (413), tous les autres champs dans la trame MAC pleine longueur (200) étant exclus de la trame MAC courte (400) ; et
transmettre (1005), par le dispositif à puissance limitée, la trame MAC courte (400).

2. Procédé selon la revendication 1, dans lequel la trame MAC courte (400) comprend au moins un champ avec une longueur plus courte qu'une longueur d'un champ dans la trame MAC pleine longueur (200).

3. Procédé selon la revendication 1, dans lequel le champ de contrôle de trame (405) est un champ parmi un champ de 1 octet de longueur et un champ de 2 octets de longueur, les deux champs d'adresse MAC (407, 409) sont chacun des champs de longueur variable, le champ de contrôle de séquence (411) est un champ de 1 octet de longueur, et le champ FCS (415) est un champ parmi un champ de 2 octets de longueur et un champ de 4 octets de longueur.

4. Procédé selon la revendication 1, dans lequel une catégorie d'accès de trame est indiquée par un ou plusieurs bits dans la trame MAC courte (400).

5. Procédé selon la revendication 1, dans lequel la trame MAC courte (400) a une indication de trame courte (625), l'indication de trame courte (625) étant située dans un champ de signal (619) d'une unité de données de protocole de couche physique (600).

6. Procédé selon la revendication 1, dans lequel la trame MAC courte (400) a un champ de sous-type (511) dans un champ de contrôle de trame (500) différentiant la trame MAC courte (400) de la trame MAC pleine longueur (200).

7. Dispositif de communication, comprenant :
un émetteur (905) configuré pour transmettre une trame de contrôle d'accès au support, MAC, courte (400), la trame MAC courte (400) ayant moins de champs qu'une trame MAC pleine longueur (200), la trame MAC pleine longueur (200) étant une trame MAC IEEE 802.11 pleine longueur, et la trame MAC courte (400) étant une trame MAC IEEE 802.11 raccourcie constituée d'un champ de contrôle de trame (405), de deux champs d'adresse MAC (407, 409), d'un champ de contrôle de séquence (411), d'un corps de trame (413) et d'un champ de séquence de vérification de trame, FCS (415), le champ de contrôle de séquence (411) étant positionné entre les deux champs d'adresse MAC (407, 409) et le corps de trame (413), tous les autres champs dans la trame MAC pleine longueur (200) étant exclus de la trame MAC courte (400) ; et
un processeur (915) couplé de manière opérationnelle à l'émetteur (905), le processeur (915) étant configuré pour générer la trame MAC courte (400).

8. Dispositif de communication selon la revendication 7, dans lequel la trame MAC courte (400) comprend au moins un champ avec une longueur plus courte qu'une longueur d'un champ dans la trame MAC pleine longueur (200).

9. Dispositif de communication selon la revendication 7, dans lequel le processeur (915) est configuré pour différencier la trame MAC courte (400) de la trame MAC pleine longueur (200) avec une indication de trame courte (625).

10. Dispositif de communication selon la revendication 7, dans lequel le processeur (915) est configuré pour différencier la trame MAC courte (400) de la trame MAC pleine longueur (200) avec un champ de sous-type (511) dans un champ de contrôle de trame (500) de la trame MAC pleine longueur (200).
